# EUROPEAN PATENT APPLICATION

(11) **EP 2 224 317 A1**
(43) Date of publication of application: **01.09.2010**
(21) Application number: 09154164.9
(22) Date of filing: 02.03.2009
(51) Int. Cl.: G06F 3/033, G06F 3/048

(54) **Apparatus and method for scrolling pages displayed on a handheld device**

(30) Priority: 27.02.2009 US 394770
(71) Applicant: RESEARCH IN MOTION LIMITED, Waterloo, Ontario N2L 3W8 (CA)
(72) Inventor: Krete, Morley, Waterloo Ontario N2L 3X2 (CA)
(74) Representative: Rickard, David John

(57) **Abstract**

A page flip mechanism and method for a handheld device. According to an embodiment, the page flip mechanism is configured to work in conjunction with a pointing device on the handheld device to flip or advance a document page by page. According to an embodiment, the page flip mechanism is configured to display the document based on page breaks in the document. According to another embodiment, the page flip mechanism is configured to display the document based on page boundaries corresponding to the display area. According to another aspect, the page flip mechanism is configured for a page select mode of operation. According to another aspect, the page flip mechanism is configured for a zoom mode of operation.

## Description

The present application relates to handheld devices, such as a mobile communication or handheld device, and more particularly to a page flip or advance mechanism and method for operating a display module and/or viewing a document on the display module of a handheld device.

Handheld wireless devices with Internet browser capabilities have become commonplace. The size of the display module on the handheld device inherently limits the amount of information that can be displayed. For example, a webpage downloaded to the device is typically divided into a number of pages (e.g. page breaks), and the user scrolls through the pages one at a time using a pointer and scroll bar or scroll arrows, 'Page Up' or 'Page Down' buttons, or the like. Similarly, a document displayed on the handheld device will be divided into one or more pages or sections which are configured for the size of the display module on the device. Other types of handheld devices can include a track wheel or track ball that allows the user to scroll across the pages for the webpage.

It will be appreciated that while existing scrolling mechanisms provide the capability to view the pages or sections of a document displayed on a handheld, viewing or moving between the pages of long document can be cumbersome. Furthermore and while a track wheel can facilitate viewing of the webpage or document, the scrolling operation is not aligned with the page breaks.

Accordingly, there remains a need for improvements in the art.

### BRIEF SUMMARY

The present application comprises embodiments of a page flipping mechanism and method for operating a display module and/or viewing a document on the display module of a handheld device.

Other aspects and features according to the present application will become apparent to those ordinarily skilled in the art upon review of the following description of embodiments of the invention in conjunction with the accompanying figures.

### BRIEF DESCRIPTION OF THE DRAWINGS

Reference will now be made to the accompanying drawings which show, by way of example, embodiments of the present application, and in which:

Fig. 1 shows in diagrammatic form an exemplary mobile wireless communication device which is configured with a page flipping mechanism according to an embodiment according to the present disclosure;

Fig. 2 shows in schematic form an exemplary implementation for mobile wireless communication device of Fig. 1;

Fig. 3(a) shows a page flipping mechanism according to an embodiment of the present disclosure;

Fig. 3(b) shows the page flipping mechanism of Fig. 3(a) according to another embodiment of the present disclosure;

Fig. 4(a) shows the page flipping mechanism configured according to an operating mode for displaying/viewing an exemplary document on the handheld device;

Fig. 4(b) shows the page flipping mechanism configured according to another operating mode for displaying/viewing an exemplary document on the handheld device;

Fig. 4(c) shows the page flipping mechanism configured according to another operating mode for displaying/viewing an exemplary document on the handheld device; and

Fig. 5 shows in flowchart form a process or method for operating the page flipping mechanism according to an embodiment of the present disclosure.

Like reference numerals indicate like or corresponding elements in the drawings.

### DESCRIPTION OF PREFERRED EMBODIMENTS

Embodiments according to the present disclosure are generally directed to a page flipping mechanism and method for operating a display module and/or viewing a document on the display module of a handheld device.

According to one broad aspect, there is provided a mobile communication device comprising: a display module configured for displaying a document comprising one or more pages; a pointing device configured for manipulating the document on a line by line basis; and a page mechanism configured for manipulating the display of the document on a page by page basis.

According to another broad aspect, there is provided a method for manipulating the display of a document on a mobile communication device having a display, wherein said document comprises one or more pages and said one or more pages exceed a display area on said display, said method comprises the steps of: providing a component for displaying a section of the document on the display; providing a component responsive to an input for moving the display of the document section on a first incremental basis; providing a component responsive to an input for moving the display of the document on a second incremental basis corresponding to page boundaries.

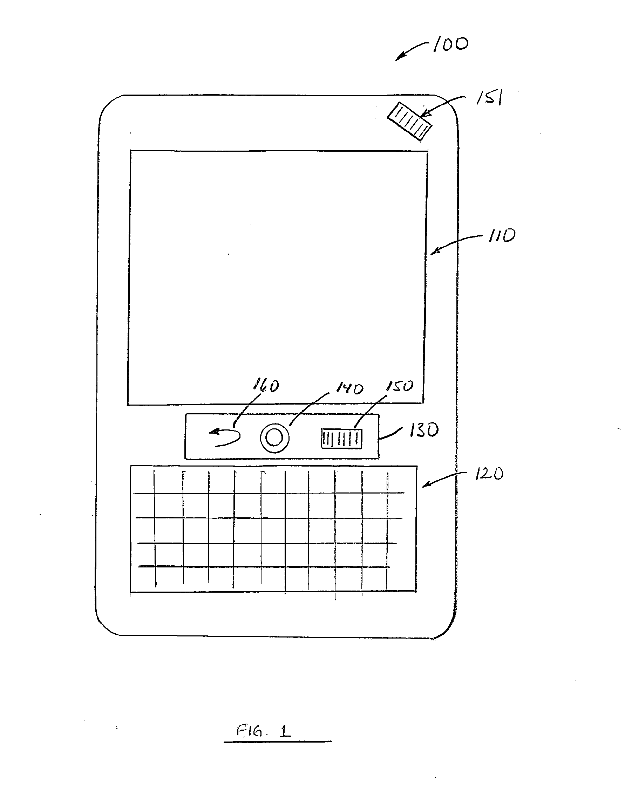

Reference is first made to Fig. 1, which shows in diagrammatic form a handheld device, for example, a mobile communication device, indicated generally by reference 100 wherein an embodiment as described herein may be practised. While embodiments according to the present disclosure are described in the context of a mobile communication device, it will be appreciated that the mechanism is applicable to other types of handheld or portable devices.

The handheld device 100 comprises a display 110, a keypad 120 or other type of data entry input (e.g. a touch sensitive overlay), and a navigation control panel 130. According to an embodiment, the navigation control panel 130 comprises a trackball or other type of pointing device indicated generally by reference 140 and a page advance or flip control indicated generally by reference 150. According to an embodiment, the navigation control panel 130 can also include a back or return key indicated by reference 160. According to an embodiment, the page flip control 150 comprises a scroll wheel and is configured to work with the trackball 140 to manipulate images (e.g. a document, web pages,...) displayed on the display 110, as will be described in more detail below. According to another embodiment, the page flip control is located above the display 110 as indicated by reference 151. As will be described in more detail below in accordance with embodiments of the present disclosure, the page flip control 150 comprises a mechanism for manipulating displayed images or documents or other types of textual or graphical elements that are larger than the display area of the display module. According to another aspect, the page flip control 150 is configured to function in addition to or in conjunction with other navigation controls, as described in more detail below. In the context of the present description, document means a text document, Web pages, graphical elements in a display format, images, emails, electronic books or e-books, and other types of information that can be displayed in a page format on the device 100.

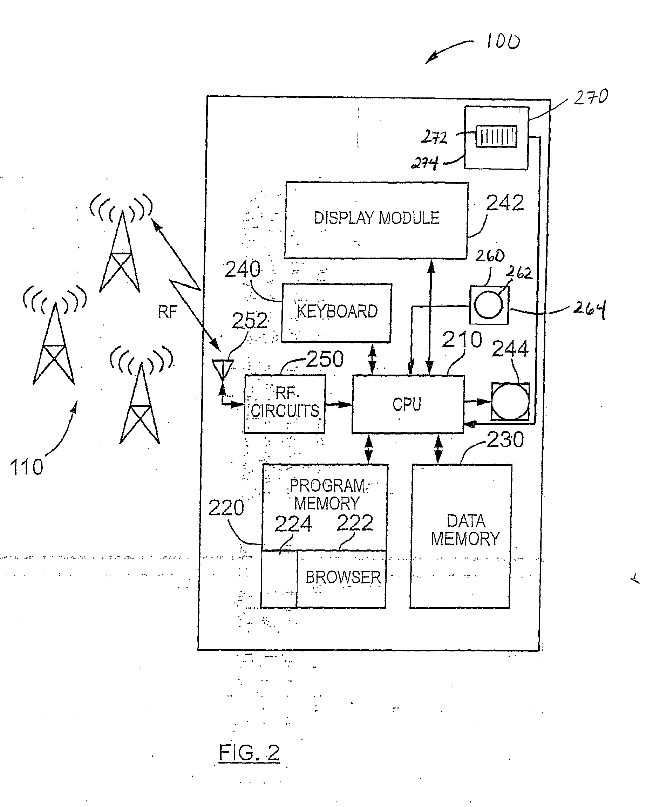

Reference is next made to Fig. 2, which shows in more detail an exemplary implementation of the mobile communication device 100 according to an embodiment. The mobile communication device 100 comprises a central processing unit or CPU 210. The CPU 210 operates under the control of a program (i.e. firmware or software) stored in program memory 220. The CPU 210 is also provided with data memory 230. The CPU 210 is operatively coupled to a keyboard module 240, a display module 242, a microphone and an audio transducer or speaker indicated generally by reference 244, a trackball module 260 and a page flip control module 270. The keyboard module 240 comprises the key pad 120 (Fig. 1) and a hardware and/or firmware components that are operatively coupled to the CPU 210. The display module 242 comprises the display 110 (Fig. 1) together with hardware and/or firmware components and is operatively coupled to the CPU 210. The trackball module 260 corresponds to the trackball 140 in the navigation control panel 130 in Fig. 1 and comprises an actuator 262 corresponding to the trackball 140 and control circuitry (e.g. hardware and/or firmware), indicated generally by reference 264, for interfacing the trackball actuator 262 to the CPU 210. Similarly, the page flip control module 270 incorporates the page flip control 150 in the navigation panel 130 in Fig. 1 and comprises an actuator 272 corresponding to the page flip control 150 and control circuitry (e.g. hardware and/or firmware), indicated generally by reference 274, for interfacing the page flip actuator with the CPU 210. In addition to the program executable code providing for performing the functions associated with the operation of the mobile communication device 100, the program memory 220 includes a browser program 222. The browser program 222 allows a user to access web pages on the Internet 112 using the mobile communication device 130, i.e. utilizing a graphical user interface comprising, for example, the keyboard 240 and the display module 242 and/or the trackball 260 and the page flip control module 270. The program memory 220 can include other applications or programs indicated generally by reference 244 for accessing and reading documents, emails, electronic books and types of text or graphic/image files, such as Microsoft Word™, Microsoft Excel™, Adobe™, electronic mail or email, etc.

As shown, the mobile communication device 100 includes RF demodulation/modulation and decoding/coding circuits 250, and a suitable RF antenna 252. The RF demodulator/modulator and decoder/coder circuits 250 and the RF antenna 252 are operatively coupled to the CPU 210 and provide an interface for wireless communication with a wireless network indicated generally by reference 102. The wireless network 102 is part of a wireless infrastructure that links the mobile communication device 100 and provides access to wireless services, such as voice and data communications, the Internet, email, etc. The particular implementation details of the RF circuits will be within the understanding of those skilled in the art, and is therefore not described in further detail.

In operation for example, to browse the Internet, the user invokes the browser program 222 in the mobile communication device 100 and using the graphical user interface (i.e. the display 242, the keyboard 240 and/or a thumb-operated track wheel 241) enters the URL or a bookmark for a website of interest, for example, http://www.google.ca. The browser 222 converts the user entry into a HTTP request and sends the request to a server coupled to the wireless infrastructure. According to an embodiment, the device 100 includes an application or function in the program module 224 which takes the HTTP request and converts and compresses it into a data format which is then sent to the server. The server processes the HTTP request received from the handheld device 100 and transmits the HTTP request to a web server, for example, a web server for "google.ca". In response to the request, the web server returns the requested or corresponding webpage, which is relayed by the server to the mobile communications device 100. According to an embodiment, the server converts and compresses the data or information from the web site into a data format that is more efficient for wireless transmission. According to another aspect, a document is loaded into the data memory 230 for display on the display module 242. The document may have originated as a webpage (e.g. downloaded and stored from the Internet), an attachment to an email received or stored at the device 100, or a document or text generated by an application running on the device 100, for example, a Word or an Excel document.

The originating client, for example, a web browser, is typically referred to as the "user agent". The destination server stores resources, such as, HTML files and images, and is typically referred to as the "origin server". In between the user agent and the origin server there may be several intermediaries, for example, proxies and gateways. In the context of the present application, the mobile handheld devices 100 comprise user agents, the server comprises an intermediary server, and the web server(s) comprise origin servers. According to an embodiment, the intermediary server is located or configured behind a firewall.

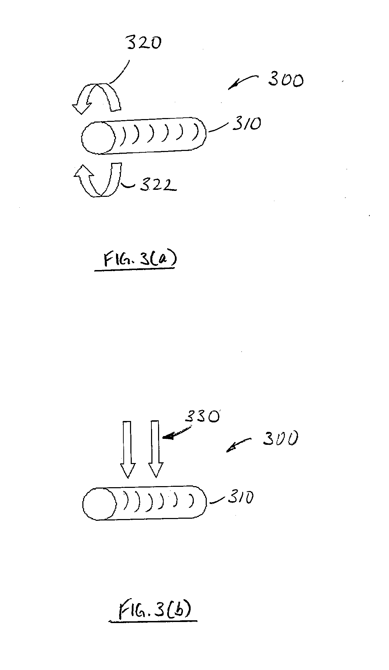

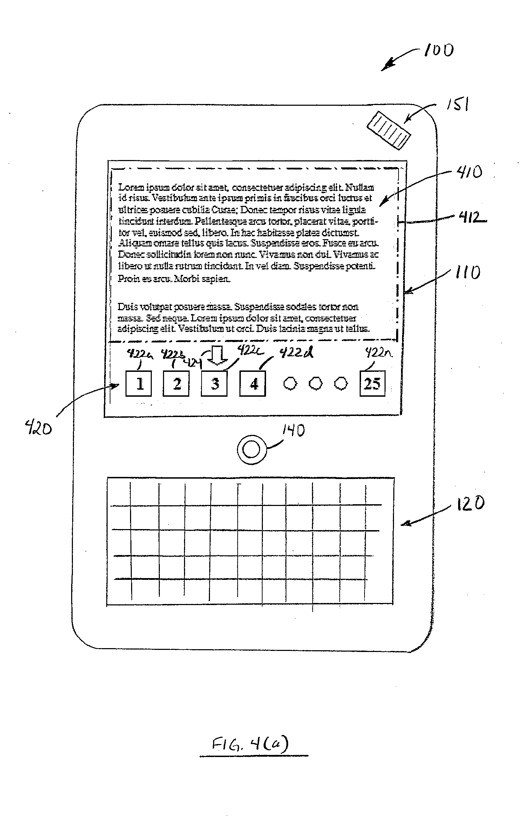

Reference is next made to Fig. 3(a) which shows a page flip mechanism according to an embodiment and indicated generally by reference 300. The page flip mechanism 300 comprises a scroll wheel 310 and according to this embodiment, the scroll wheel 310 is configured as a bidirectional scroll wheel and can be turned or rotated in the directions indicated by arrows 320 and 322. According to an embodiment, the scroll wheel 310 is configured to move the document being displayed on the display module 110 (Fig. 1) up or down depending on the rotation of the scroll wheel 310, i.e. in the direction of arrow 320 or arrow 322. For example, according to an exemplary implementation, rotating the scroll wheel 310 in the direction of arrow 320 moves the display of the document up, i.e. to the top or beginning of the document, and rotating the scroll wheel 310 in the direction of the arrow 322 moves the display of the document down, i.e. to the bottom or end of the document. According to another embodiment, the page flip control module 270 (Fig. 2) is configured to advance the document in page increments, e.g. according to page breaks or page boundaries in the document, in response to the scroll wheel 310 being turned. According to another aspect, the page flip control module 270 (Fig. 2) is configured to advance or flip the document on a page boundary basis corresponding to the display size or active display area of the display 110, for example, as indicated by reference 412 in Fig. 4(a). For example, if the scroll wheel 310 is rotated in the direction of arrow 320 the document advances the document up one page. If the user continues to rotate the scroll wheel 310, the document continues to advance up on a page by page basis. Similarly, if the scroll wheel 310 is turned in the direction of arrow 322, the document moves down (i.e. to the end of the document) one page at a time. The operation and configuration of the scroll wheel 310 in the context of manipulating a document displayed on the device 100 is described in more detail below. The operation/functionality of the scroll wheel 310 can be configured according to an "Options" or "Settings" page, menu, or pop-up window, which is accessed via the display module 110 and the keypad 120/trackball 140, as will be within the understanding of one skilled in the art.

Reference is next made to Fig. 3(b), which show an exemplary implementation for the scroll wheel 310 (and page flip control module 270 - Fig. 2) according to another embodiment. According to this aspect, the scroll wheel 310 is configured to be depressed in the direction indicated by arrow 330. According to an embodiment, the device 100 is configured (e.g. the CPU 210 operating under stored program control) to provide a page selector as indicated generally by reference 420 in Fig. 4(a). The page selector 420 is configured to allow a user to select a specific page in the document being displayed on the display module 110 (Fig. 1). According to an embodiment, the page selector 420 comprises an icon or other graphical element for corresponding pages in the document. As shown in Fig. 4(a), an icon or graphical element 422, indicated individually by references 422a, 422b, 422c, 422d .... 422n, is provided for each page. The page selector 420 also includes a moveable pointer or selector indicated by reference 424. The page pointer is 424 is positioned over one of the page icons 422 by rotating the scroll wheel indicated by reference 151 in Fig. 4(a), and depressing (i.e. clicking) the scroll wheel 151 causes the selected page to be displayed in the display 110. For the example depicted in Fig. 4(a), the page icon 422c (i.e. corresponding to page 3 of the document) has been selected, and depressing the scroll wheel 151 results in page 3 of the document being displayed. According to another aspect, clicking the scroll wheel 151 ends the page select mode of operation, and the scroll wheel 151 is configured to operate in "page flip" mode, for example as described above.

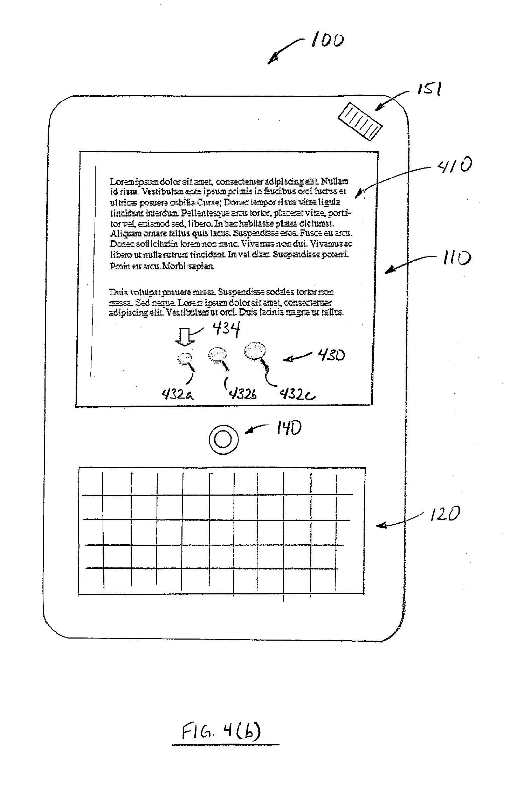

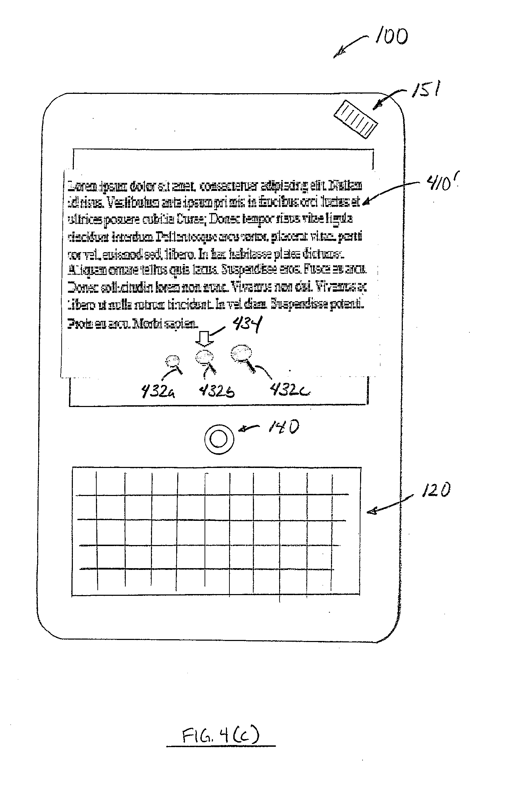

According to another embodiment, the scroll wheel 310 of Fig. 3(b) is configured to operate with a zoom level control indicated generally by reference 430 in Fig. 4(b). The zoom level control 430 provides a zoom mechanism for increasing or decreasing the size of the text and other visual elements appearing in a document 410 (or image) appearing in the display 110. According to an embodiment, the zoom control 430 comprises an icon or other graphical element 432 for each corresponding zoom level pages in the document. The zoom control 430 shown in Fig. 4(b) comprises three zoom level icons 432, indicated individually by references 432a, 432b and 432c. The zoom control 430 also includes a moveable pointer or selector indicated by reference 434. The zoom pointer is 434 is positioned over the desired or selected zoom level, for example, the zoom level icon 432a in Fig. 4(b), or the zoom level icon 432c in Fig. 4(c). The zoom pointer 434 is moved back and forth by rotating the scroll wheel 151 and depressing (i.e. clicking) the scroll wheel 151 to activate the selected zoom level, for example, as described above. For the example as depicted in Fig. 4(c), the zoom level icon 432c is selected and activated by depressing the scroll wheel 151 which results in the text for the document 410' being displayed in a magnified or enlarged format. According to another aspect, clicking the scroll wheel 151 ends the zoom mode of operation, and the scroll wheel 151 is configured or returns to operate in "page flip" mode, for example as described above.

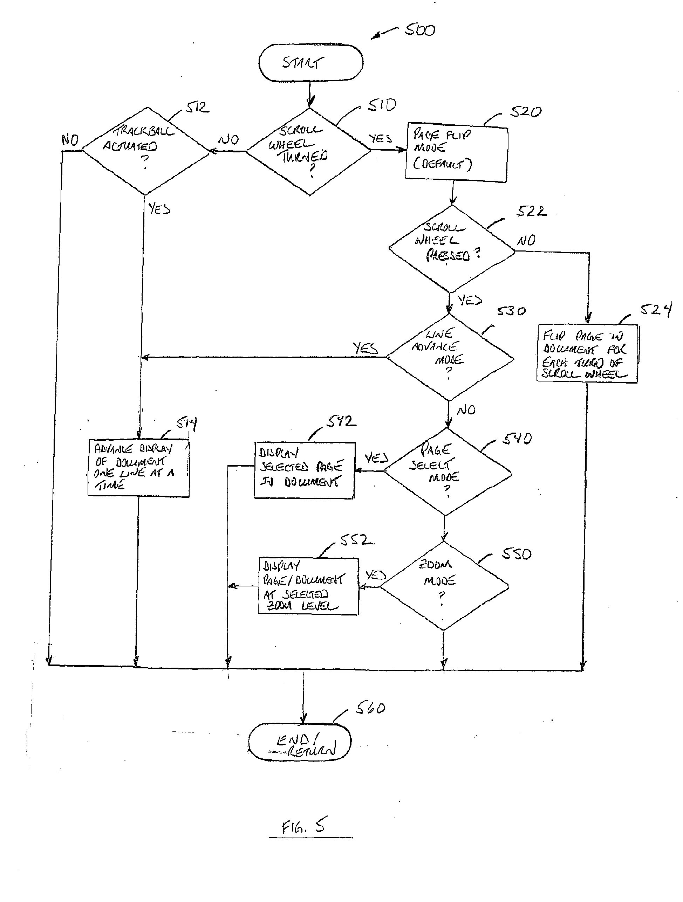

Reference is next made to Fig. 5, which shows in flowchart form a method or process indicated generally by reference 500 for operating the display function utilizing the page flip mechanism and another navigation control, e.g. the trackball 140 (Fig. 1), on the mobile communication device 100. The process 500 may be implemented as one or more code components, objects or functions in software/firmware that are executed by the CPU 140. The particular implementation details will be within understanding of one skilled in the art.

As shown in Fig. 5, the scroll wheel is monitored for actuation as indicated by reference 510, e.g. turned or rotated by a user. If the trackball 140 (Fig. 4) is actuated as indicated by reference 512, then the device 100 is configured to move the display of the document (e.g. the document 420 in Fig. 4) up or down line by line in response to the turning of the trackball 140, as indicated by reference 514. If the scroll wheel 151 (Fig. 4) is actuated, for example, turned by a user (as determined in step 510), then the scroll wheel 151 is in a default page flip mode, as indicated by reference 520. Next a check is made to determine if the scroll wheel 151 has been depressed, as indicated by reference 522. If no, then the scroll wheel 151 is operated in the default page mode, i.e. the document 420 is advanced by a page up or down for each turn or rotation of the scroll wheel 151 (for example, as described above), as indicated in step 524. If neither the trackball 140 nor the scroll wheel 151 is actuated, the process proceeds to end/return 560.

If, on the other hand, the scroll wheel has been pressed (as determined in step 522), then the operating mode is being changed. According to an embodiment, the operating mode for the scroll wheel 151 can be changed to line advance mode as indicated by step 530. In line advance mode, the display of the document 420 (Fig. 4) is moved up or down one line at a time in response to each turn or rotation of the scroll wheel 151. According to an embodiment, the line advance mode for the scroll wheel 151 is synchronized with the trackball 140, as indicated by reference 514. According to another embodiment, the scroll wheel 151 is configured to override the trackball 140 in line advance mode. According to an embodiment, the operating mode for the scroll wheel 151 can be changed to page select mode, as indicated by step 540. In page select mode, the scroll wheel 151 is configured to select one of the pages in the document as indicated by step 542 and described above with reference to Fig. 4(a). According to another embodiment, the operating mode for the scroll wheel 151 can be changed to zoom mode, as indicated in step 550. In zoom mode, the scroll wheel 151 is configured to select a zoom level for viewing in the document 420 (Fig. 4) as indicated by step 552, and described above with reference to Figs. 4(b) and Fig. 4(c). According to an embodiment, the device 100 is configured to display and cycle through the various operating modes in response to the scroll wheel 151 being clicked or depressed. According to another embodiment, the device 100 is configured to display a menu screen or pop-up window/box in response to a click or depression, and an operating mode is selected.

The functionality and features associated with the mobile communication device and/or the page flip mechanism as described above in accordance with the embodiments may be implemented in the form of one or more software objects, modules, components, firmware or computer programs or program modules in the mobile communication device and/or the page flip control module. Further, at least some or all of the software objects can be hard-coded into central processing units and/or read only memories or other non-volatile storage media in the mobile communication device and/or other components or modules depicted in the drawings. The specific implementation details of the software objects, firmware, and/or program modules will be within the knowledge and understanding of one skilled in the art.

While the embodiments of the apparatus and methods have been described in the context of wireless or mobile communication devices, it will be appreciated that the systems and methods have wider applicability to other types of devices.

The embodiments according to the present disclosure may be embodied in other specific forms without departing from the spirit or essential characteristics thereof. Certain adaptations and modifications of the invention will be obvious to those skilled in the art. Therefore, the presently discussed embodiments are considered to be illustrative and not restrictive, the scope of the disclosure being indicated by the appended claims rather than the foregoing description, and all changes which come within the meaning and range of equivalency of the claims are therefore intended to be embraced therein.

## Claims

1. A mobile communication device (100) comprising:
a display module (110) configured for displaying a document (410) comprising one or more pages;
a pointing device (140) configured for manipulating the document (410) on a line by line basis; and
a page mechanism (150 or 151) configured for manipulating the display of the document (410) on a page by page basis.

2. The mobile communication device (100) as claimed in claim 1, wherein said page mechanism (150) comprises a page select component (420) configured for selecting one of said one or more pages.

3. The mobile communication device (100) as claimed in claim 2, wherein said page select component (420) comprises a graphical element (422) corresponding to each of said one or more pages displayed on said display (110) and a page selector component (424) responsive to an input for selecting one of said graphical elements (422).

4. The mobile communication device (100) as claimed in any preceding claim, wherein said page mechanism (150) comprises a zoom mode component (430) configured for changing the size of a section of the page (410') being displayed on the display (110).

5. The mobile communication device (100) as claimed in claim 4, wherein said zoom mode component (430) comprises a plurality of graphical elements (432) each corresponding to a zoom level and a zoom level selector component (434) responsive to an input for selecting one of said graphical elements (432).

6. The mobile communication device (100) as claimed in any preceding claim, wherein said page mechanism (150) comprises a scroll wheel (310) configured to rotate in a forward direction and in a backward direction, and said display (110) being configured to move the display of said document (410) on a page boundary basis in a direction corresponding to the rotation of said scroll wheel (310).

7. The mobile communication device (100) as claimed in claim 6, wherein said page boundary basis corresponds to page breaks in said one or more pages.

8. The mobile communication device (100) as claimed in claim 6, wherein said page boundary basis corresponds to the display area of said display (110).

9. The mobile communication device (100) as claimed in any one of claims 6 to 8, wherein said scroll wheel (310) is configured to receive a depression, and comprising a page select component responsive to said scroll wheel being depressed for initiating a page select mode of operation.

10. The mobile communication device (100) as claimed in claim 9, and comprising a zoom mode component (430) responsive to said scroll wheel (310) being depressed for invoking a zoom mode of operation.

11. A method (500) for manipulating the display of a document (410) on a mobile communication device (100) having a display (110), wherein said document comprises one or more pages and said one or more pages exceed a display area on said display (110), said method comprising the steps of:
providing a component (224) for displaying a section of the document (410) on the display (110);
providing a component (140) responsive to an input for moving the display of the document section on a first incremental basis;
providing a component (150) responsive to an input for moving the display of the document (410) on a second incremental basis corresponding to page boundaries.

12. The method as claimed in claim 11, wherein said page boundaries comprise page breaks in the document and correspond to the one or more pages in the document.

13. The method as claimed in claim 11, wherein said page boundaries correspond to the display area of said display.

14. The method as claimed in any one of claims 11 to 13, wherein said document comprises one of a text document, an electronic book, a webpage, an email, an email attachment and an image.

15. A computer program product comprising a computer-readable medium storing computer-readable instructions that when executed, cause an electronic computing device to perform the method according to any one of claims 11 to 14.

## Amended claims

### Amended claims in accordance with Rule 137(2) EPC.

**1.** A mobile communication device (100) comprising:
a display module (110) configured for displaying a document (410) comprising one or more pages;
a pointing device (140) configured for manipulating the document (410) on a line by line basis; and
a page flip device (150 or 151) configured for manipulating the display of the document (410) on a page by page basis.

**2.** The mobile communication device (100) as claimed in claim 1, wherein said page flip device (150) comprises a page select component (420) configured for selecting one of said one or more pages.

**3.** The mobile communication device (100) as claimed in claim 2, wherein said page select component (420) comprises a graphical element (422) corresponding to each of said one or more pages displayed on said display (110) and a page selector component (424) responsive to an input for selecting one of said graphical elements (422).

**4.** The mobile communication device (100) as claimed in any preceding claim, wherein said page flip device (150) comprises a zoom mode component (430) configured for changing the size of a section of the page (410') being displayed on the display (110).

**5.** The mobile communication device (100) as claimed in claim 4, wherein said zoom mode component (430) comprises a plurality of graphical elements (432) each corresponding to a zoom level and a zoom level selector component (434) responsive to an input for selecting one of said graphical elements (432).

**6.** The mobile communication device (100) as claimed in any preceding claim, wherein said page flip device (150) comprises a scroll wheel (310) configured to rotate in a forward direction and in a backward direction, and said display (110) being configured to move the display of said document (410) on a page boundary basis in a direction corresponding to the rotation of said scroll wheel (310).

**7.** The mobile communication device (100) as claimed in claim 6, wherein said page boundary basis corresponds to page breaks in said one or more pages.

**8.** The mobile communication device (100) as claimed in claim 6, wherein said page boundary basis corresponds to the display area of said display (110).

**9.** The mobile communication device (100) as claimed in any one of claims 6 to 8, wherein said scroll wheel (310) is configured to receive a depression, and comprising a page select component responsive to said scroll wheel being depressed for initiating a page select mode of operation.

**10.** The mobile communication device (100) as claimed in claim 9, and comprising a zoom mode component (430) responsive to said scroll wheel (310) being depressed for invoking a zoom mode of operation.

**11.** A method (500) for manipulating the display of a document (410) on a mobile communication device (100) having a display (110), wherein said document comprises one or more pages and said one or more pages exceed a display area on said display (110), said method comprising the steps of:
providing a component (224) for displaying a section of the document (410) on the display (110);
providing a component (140) responsive to an input for moving the display of the document section on a first incremental basis;
providing a component (150) responsive to an input for moving the display of the document (410) on a second incremental basis corresponding to page boundaries.

**12.** The method as claimed in claim 11, wherein said page boundaries comprise page breaks in the document and correspond to the one or more pages in the document.

**13.** The method as claimed in claim 11, wherein said page boundaries correspond to the display area of said display.

**14.** The method as claimed in any one of claims 11 to 13, wherein said document comprises one of a text document, an electronic book, a webpage, an email, an email attachment and an image.

**15.** A computer program product comprising a computer-readable medium storing computer-readable instructions that when executed, cause an electronic computing device to perform the method according to any one of claims 11 to 14.
